# EUROPEAN PATENT SPECIFICATION

(11) **EP 0 230 121 B1**
(45) Date of publication and mention of the grant of the patent: **21.04.1993**
(21) Application number: 86309570.9
(22) Date of filing: 09.12.1986
(51) Int. Cl.: C08F 10/06, C08F 2/00, C08F 4/60, B01J 19/00

(54) **Process of polymerizing propylene**
Verfahren zur Polymerisation von Propylen
Procédé de polymérisation de propylène

(30) Priority: 11.12.1985 JP 276694/85
(43) Date of publication of application: 29.07.1987
(73) Proprietor: MITSUI TOATSU CHEMICALS, Inc., Chiyoda-Ku Tokyo 100 (JP)
(72) Inventor: Asanuma, Tadashi, Takaishi-shi Osaka-fu (JP); Uchikawa, Nobutaka, Takaishi-shi Osaka-fu (JP); Fujio, Ichiro, Takaishi-shi Osaka-fu (JP)
(74) Representative: Harvey, David Gareth

(56) References cited:
- US-A- 3 220 998
- US-A- 3 257 375
- US-A- 3 726 849

## Description

This invention relates to a process for polymerizing propylene, ie. for the production of a propylene homopolymer of copolymer. More specifically, it relates to a process for producing a propylene homopolymer or copolymer of uniform quality at a constant production rate.

Numerous processes have heretofore been made known for producing polymers (eg. polypropylene) by polymerizing olefins (eg. propylene) in the presence of a catalyst such as a Ziegler-Natta catalyst, see for example US-A-3,726,849, US-A-3,220,998 and US-A-3,257,375. Polypropylenes have already been produced industrially at a production scale of several hundred tons per day. In the production of polypropylene on an industrial scale, it is desired to produce polypropylene of uniform quality at a constant production rate. Removal of the heat of polymerization is difficult where the reactor has a large capacity. Therefore, polypropylene is usually produced in a continuous operation by using a reactor with two or more polymerization tanks connected in series.

Various methods of controlling production rate are known in the prior art. For example, US-A-3,220,998 discloses an olefin polymerization process in which the production rate of the polymer is controlled by correcting the feed rate of one of the catalysts. US-A-3,726,849 discloses a propylene polymerization process in which the production rate is controlled by varying the feed rate of the catalyst using the heat generated in the reactor for calculating the actual production rate. US-A-3,257,375 discloses a similar method of control applied to an olefin polymerization process. However, the above prior art processes suffer from the problem that they are relatively expensive, since control is mediated at least in part at the level of the supply of expensive transition metal catalysts. The present invention solves this problem and so results in a significant cost saving by providing a process in which (so long as the weight ratio of the organoaluminium to the transition metal catalyst is within a specific range) control of polymer production rate is mediated via changes in the amount of relatively cheap organoaluminium compound alone.

A wide variety of Ziegler-Natta catalysts are known for use in the production of polyproplene; see for example US-A-3,726,849. Many kinds of Ziegler-Natta catalysts are also used upon actual, ie. industrial production of polyproplene. However, the preformance of a catalyst varies considerably from one preparation lot to another. The production rate thus varies if the catalyst is charged simply at a constant rate into a reactor. As mentioned above, it is therefore the practice to vary the amount of the catalyst to be charged; and such practice is disclosed in US-A-3,726,849.

In the above-described method, the production rate per unit amount of catalyst varies depending on the performance of the catalyst, so that the amount of catalyst residue remaining in the resulting polypropylene varies. Therefore, the product obtained fails to possess uniform quality. The above method involves another problem, in that a transition metal catalyst, which is costly and requires relatively complex apparatus for its preparation and charging into a reaction tank, must be used in varied amounts.

As noted above, use of a large reactor entails difficulties in the removal of heat. It is thus preferable to conduct polymerization in a multi-tank reaction system in which many polymerization tanks are connected together. Moreover, a limitation is imposed on the heat-removing ability of each tank. There is hence a problem that the output of the entire reaction system is governed by a polymerization tank having the lowest heat-removing ability, unless the polymerization rate is controlled in each tank.

An object of this invention is to provide a process for producing a propylene homopolymer or copolymer of uniform quality at a constant production rate.

The inventors have carried out extensive research with a view toward developing solutions to the above-mentioned problems, and have found that they can be solved by controlling the production rate of a propylene homopolymer or copolymer by a special method which this invention embodies.

According to the present invention there is provided a process for continuously producing propylene homopolymer or a propylene copolymer at a constant production rate in the presence of a catalyst system composed of a transition metal catalyst and an organoaluminium compound, which comprises:
determining beforehand in a continuous polymerization process, which is similar to that carried out in an actual polymerization apparatus, the relation between the amount of organoaluminium charged into the process and the production rate of polypropylene per unit amount of a transition metal catalyst;
determining from said relation a specific range within which, i.e., below a specific upper limit but above a specific lower limit, the production rate of polypropylene per unit amount of a transition metal catalyst can be controlled without modifications to the physical properties of the resulting polypropylene by changing the weight ratio of the organoaluminium to the transition metal catalyst;
calculating the production rate of the homopolymer or copolymer in a reaction tank from the quantity of heat generated per unit time in the reaction tank, by dividing the quantity of heat generated with the quantity of polymerization heat upon polymerization of propylene, and comonomer, if present, which quantity of heat generated is determined by correcting the quantity of heat added to and/or removed from the reaction tank in order to maintain its temperature constant by the quantity of heat released per unit time from the tank; comparing said production rate to a predetermined desired level;
controlling the amount of the organoaluminium compound charged into the reaction tank so as to maintain the production rate of the homopolymer or copolymer at a desired level while maintaining the charging rate of the transition metal catalyst at a constant level, when the weight ratio of the organoaluminium compound to the transition metal catalyst both retained in the reaction tank is within the above determined specific range; or controlling the amount of the transition metal catalyst charged into the reaction tank so as to maintain the production rate of the homopolymer or copolymer at the desired level, when the weight ratio of the organoaluminium compound to the transition metal catalyst both retained in the reaction tank is not within the above determined specific range.

The invention comprehends propylene polymers produced by the above-defined method and also apparatus designed, constructed and adapted to operate so as to perform the above-defined method.

Embodiments of the invention will now be explained, by way of example, in more detail in the following description and with reference to the accompanying drawings, in which:
FIGURE 1 is a diagrammatic representation showing the relation between the weight ratio of organoaluminum/transition metal catalyst and the amount of polypropylene produced per unit time and the molecular weight distribution and stereoregularity of resulting polypropylene;
FIGURE 2 is a diagrammatic representation illustrating variations in the amount of an organoaluminum retained in a reaction tank when the charging rate of the organoaluminum is changed;
FIGURE 3 shows one example of an apparatus suitable for use in the practice of the polymerization process of this invention; and
FIGURE 4 is a diagrammatic representation showing, as a function of time, the amount of charged triethylaluminum, the production rate (short-term value) of polypropylene calculated from the quantity of generated heat and the production rate of resulting polypropylene in an Example.

The term "propylene copolymer" as used herein means a copolymer of propylene and one or more of other α-olefins copolymerizable with propylene, for example, ethylene, butene-1, hexene-1 and so on. Although no particular limitation is imposed on the proportion of such one or more α-olefins to be used upon production of a propylene copolymer in accordance with this invention, they may preferably be used up to about 40 wt.% in total based on the whole polymer.

For the sake of convenience in the following description, the term "propylene" should be interpreted to embrace not only propylene alone but also mixtures of propylene and other α-olefins copolymerizable with propylene. By the same token, the term "polypropylene" means not only propylene homopolymers but also copolymers of the above mixtures.

In the preparation of a transition metal catalyst on an actual, i.e., industrial scale, the performance of the resulting transition metal catalyst is not the same even when it is prepared under certain predetermined constant conditions. Moreover, the production rate of polypropylene actually varies by various unknown factors in the production of propylene on an industrial scale even when the same catalyst is used. As a matter important for the constitution of the present invention, the present invention finds its basis in the discovery that the production rate of polypropylene per unit amount of a transition metal catalyst can be varied significantly by the weight ratio of an organoaluminum compound to the transition metal catalyst and the production rate of polypropylene can be expressed in terms of the amounts of respective catalyst components retained in each tank. In addition, variations in stereoregularity and molecular weight distribution which considerably affect the physical properties of polypropoylene to be obtained are ignorably small even if the weight ratio of the organoaluminum/transition metal catalyst is changed over a substantially wide range.

As exemplary catalyst systems capable of yielding the above characteristics over a wide weight ratio of the organoaluminum/transition metal catalyst may be mentioned catalyst systems of titanium trichloride catalyst and dialkylaluminum halides as well as catalyst systems of transition metal catalysts, each of which comprises a titanium halide supported on a magnesium halide, and organoaluminum compounds. Of these, a catalyst system composed of a transition metal catalyst, which comprises a titanium halide supported on a magnesium halide, and an organoaluminum compound is suitable. More especially, as a catalyst system capable of achieving the above-mentioned characteristics even when the weight ratio of the organoaluminum/transition metal catalyst is changed over such a wide range as to absorb substantially usual variations in activities among production lots, may be mentioned a catalyst system composed of a transition metal catalyst with a titanium halide supported on a magnesium halide, an oxygen-containing organic compound, a dialkylaluminum halide and a trialkylaluminum. It is suitable to control the polymerization rate of propylene by changing the weight ratio of the trialkylaluminum/transition metal catalyst.

According to this invention, the polymerization of propylene can be effected by any one of the following processes: solution polymerization making use of an inert liquid medium, bulk polymerization utilizing liquid propylene itself as a medium, and vapor-phase polymerization conducted substantially in the absence of any liquid medium.

In practising this invention, it is necessary to determine beforehand the relation between the amount of an organoaluminum charge and the production rate of polypropylene per unit amount of a transition metal catalyst. This relation is determined in a continuous polymerization process. which is similar to that carried out in an actual polymerization apparatus.

It is important to ascertain the amount of produced polypropylene periodically by detecting the quantity of generated heat. The transition metal catalyst is usually prepared batchwise, because the batchwise preparation allows one to obtain a transition metal catalyst with good performance, requires simple facilities and permits use of a simple apparatus for the recovery of various compounds employed in the preparation. Therefore, the performance of the catalyst varies from one preparation lot to another. If a polymerization reaction is conducted at a constant rate of charging of the catalyst, the production rate of polypropylene varies. If the charging rate of the organoaluminum is changed after actual detection of a change in the production rate of polypropylene from the amount of obtained polypropylene, such a change of the charging rate results in a considerable variation in the production rate of polypropylene. The present invention can therefore bring about greater effects as the amount of the transition metal catalyst per preparation lot increases, the transition metal catalyst of the same lot can be used for a longer period of time, and the retention time of the transition metal catalyst in the polymerization system becomes longer.

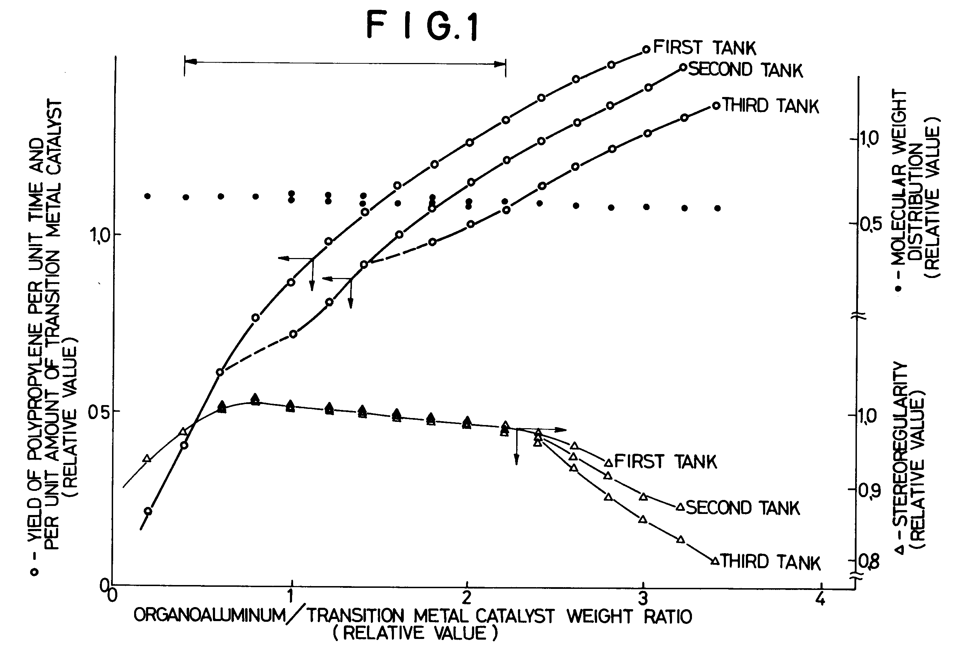

FIGURE 1 illustrates, by way of example, variations in the production rate of polypropylene per unit amount of a transition metal catalyst and the stereoregularity and molecular weight distribution of the resultant polypropylene in each of three tanks connected in series when the charging rate of an organoaluminum was changed in a three-tank continuous polymerization process while maintaining the charging rate of the transition metal catalyst at a constant level. (Using the same catalyst system as that will be described in an example of this invention, the weight ratio of the triethylaluminum/transition metal catalyst was changed solely.) It is envisaged that the activities, namely, the production rate of polypropylene per unit amount of the transition metal catalyst can be changed up to 3 times or so within the range indicated by an arrow in an upper part of FIGURE 1 (without altering the molecular weight distribution and stereoregularity) by changing the weight ratio of the organoaluminum to the transition metal catalyst. It is also understood that the production rate of polypropylene can be controlled by changing the above-mentioned weight ratio below a specific upper limit but above a specific lower limit. It is also understood that even in multi-tank continuous polymerization, catalytic activities can be maintained at the same level in all the tanks. (In other words, the tanks can be operated under such conditions that the activities of a catalyst are not lowered in subsequent polymerization tanks in spite of deactivation of the catalyst itself in the preceding polymerization tanks.)

The production rate of polypropylene in each polymerization tank can be calculated by detecting the quantity of heat generated in the polymerization tank. In other words, the exact quantity of heat generated in each polymerization tank can be determined by correcting the quantity of heat added to and/or removed from the polymerization tank in order to maintain its temperature constant by the quantity of heat released from the polymerization tank, which is governed by the apparatus and environment. A value, which is obtained by dividing the exact quantity of generated heat with the quantity of polymerization heat upon polymerization of propylene, is the production rate of polypropylene.

By following the above-described procedure, the production rate of polypropylene at a given moment can be detected. When each of a plurality of tanks is operated with a certain retention time in continuous polymerization, it is not preferable to change merely the charging rate of the organoaluminum, for example, in accordance with the relation depicted in FIGURE 1 by comparing a desired production rate with a production rate calculated by the above procedure at a given moment. In particular, when the retention time in each tank is long, the difference between the actual production rate of polypropylene and the desired production rate becomes greater as time goes on. The charging rate of the organoaluminum is therefore determined in the following manner. The amount of the organoaluminum retained in each tank at the time when the production rate of polypropylene has been detected is calculated as a cumulative value on the basis of the amount of the organoaluminum charged cumulatively in the tank by that time. Since each tank is a complete mixing tank, the amount of the organoaluminum retained in the tank, namely, the cumulative value can be determined by a simple calculation on the basis of the charging rates of the organoaluminum, a polymerization solvent, propylene and polypropylene to the tank as well as their discharging rates from the tank.

For continuous control, it is preferable to conduct this calculation continuously by inputting the charging and discharging rates of each component into a computer in accordance with an on-line system. The consumption rate of the organoaluminum may also be taken into parallel consideration when performing the above calculation if necessary.

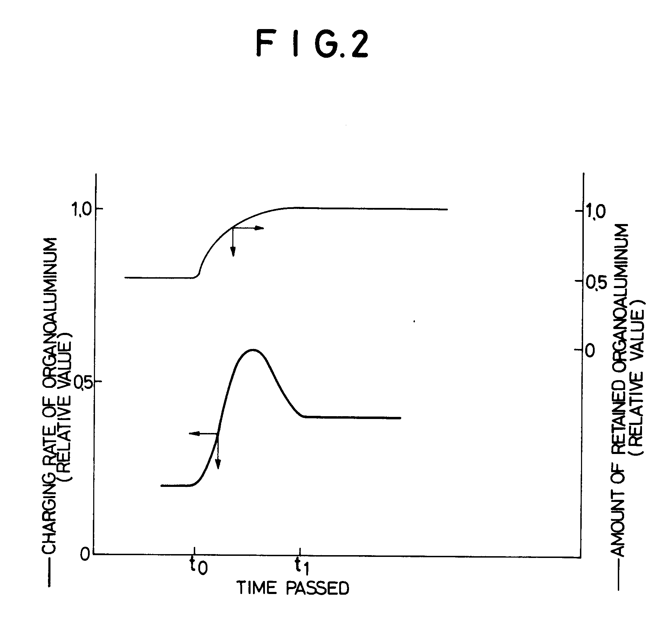

Based on the ratio of a production rate at a given time of measurement to a production rate fixed in advance and the amount of the organoaluminum retained at that time, the amount of the organoaluminum required to be retained in order to achieve a desired production rate (the target amount of the organoaluminum) can be determined. The charging rate of the organoaluminum is then set so as to achieve the target amount of the organoaluminum. For example, the organoaluminum is charged for a given time at a charging rate which is determined by multiplying the charging rate of the organoaluminum per unit time to achieve the target amount with a specific factor or by introducing the charging rate in a specific equation, thereby achieving the target amount of the organoaluminum upon an elapsed time of a certain period of time. Thereafter, the organoaluminum may be charged at a constant charging rate per unit time. A specific example of this control method is illustrated in FIGURE 2, which shows by way of example the relation among time passed (t₀ - t) and the charging rate and retained amount of the organoaluminum.

This invention has been completed on the basis of a finding that the production rate of polypropylene per unit amount of a transition metal catalyst can be controlled without modifications to the physical properties of the resulting polypropylene by changing the weight ratio of the organoaluminum to the transition metal catalyst within a specific range. Since the organoaluminum as a catalyst residue can be removed rather easily, its adverse effects to the physical properties of polypropylene are relatively small compared with the transition metal catalyst. It is hence possible to produce polypropylene of uniform quality at a constant production rate by polymerizing propylene in accordance with the process of this invention.

Practice of the process of this invention permits the production of polypropylene of uniform quality at a constant production rate. The process of this invention is therefore valuable from the industrial viewpoint.

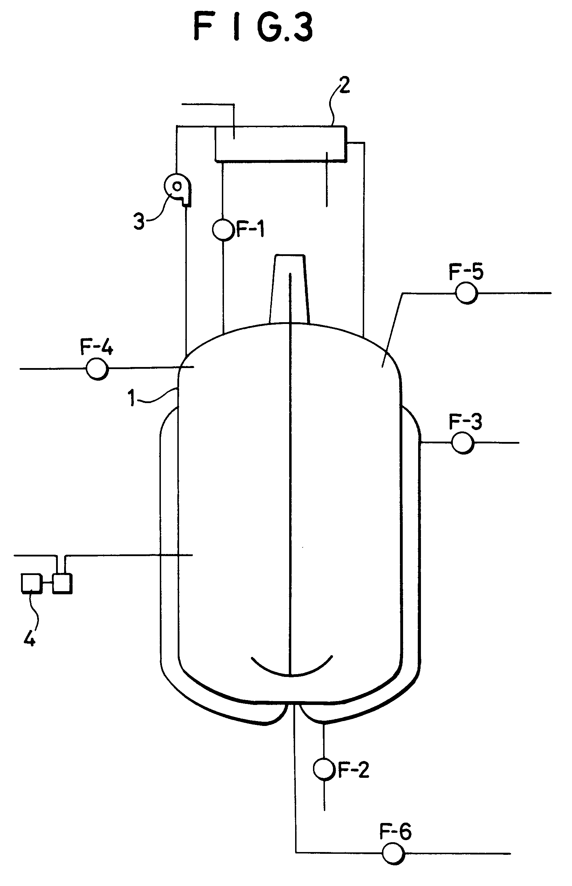

FIGURE 3 illustrates one example of an apparatus suitable for use in the practice of the polymerization process of this invention, in which there are shown a reaction tank 1, reflux condenser 2, blower 3, pump 4 for charging a slurry mixture of a transition metal catalyst, flowmeter and thermometer F-1 for a condensate, flowmeter and thermometer F-2 for cooling water to be charged, thermometer F-3 for the cooling water to be discharged, flowmeter F-4 for propylene to be charged, flowmeter F-5 for an organoaluminum to be charged, and flowmeter F-6 for a slurry to be discharged.

This invention will hereinafter be described by the following non-limiting Example.

### Example:

Four lots of a transition metal catalyst with titanium trichloride supported on magnesium chloride, 100 g per lot, were prepared in accordance with the following procedure.

### Preparation of transition metal catalyst

There was provided an oscillating mill equipped with a grinding pot having an internal capacity of 600 mℓ and containing 80 steel balls each 12 mm across. In a nitrogen gas atmosphere, the pot was charged with 20 g of magnesium chloride, 4 mℓ of tetraethoxysilane and 2 mℓ of α,α,α-trichlorotoluene, and thereafter they were ground. Ten grams of the above-ground mixture and 50 mℓ of titanium tetrachloride were added to a 200-mℓ round bottom flask. After stirring the contents at 80°C for 2 hours, the supernatant was removed by decantation and 100 mℓ of n-heptane was then added. The resultant mixture was stirred at 80°C for 15 minutes and the supernatant was then removed by decantation. This washing operation was repeated 7 times. Thereafter, 100 mℓ of n-heptane was added to obtain a slurry of a transmission metal catalyst.

### Polymerization of propylene

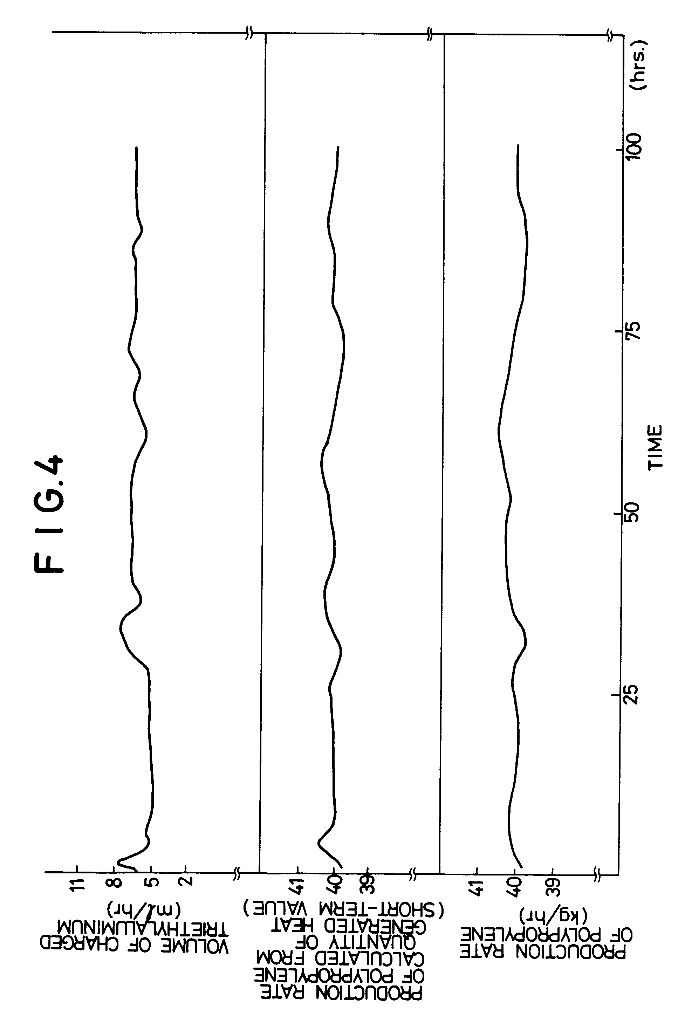

Using a reactor with three autoclaves having an internal volume of 500 ℓ and connected in series (a reactor composed of two tanks having the same structure as that illustrated in FIGURE 3 and one more tank having no reflux condenser so as to deactivate a catalyst), propylene was polymerized by bulk polymerization while using propylene itself as a medium. After deactivation of the catalyst, the thus-obtained polymer was washed with propylene in a counter-flow cleaning tower. Thereafter, unreacted propylene was caused to evaporate off to obtain it as propylene powder. As the catalyst, a mixture obtained by mixing the transition metal catalyst obtained by the above preparation procedure, methyl toluylate and diethylaluminum chloride in proportions of 100 g, 200 mℓ and 425 mℓ was charged at a charging rage of 4 g/hr in terms of the transition metal catalyst to the first tank only. The polymer slurry of the first tank was continuously transferred to the second tank, followed by transfer to the third tank for deactivation of the catalyst. The production rate (short-term value) of polypropylene in each of the first and second tanks was calculated on the basis of a value, which was obtained by correcting the sum of the quantity of heat removed from the tank by the reflux condenser (specifically, calculated from the amount and temperature of the condensate and the amounts and temperatures of gas charged to and discharged from the condenser) and the quantity of heat removed by a jacket (calculated from the amount of the cooling water supplied to the jacket and the temperatures of of the inflowing and outflowing cooling water) with the quantity of released heat which is calculated in view of the overall structure of the tank and its operating conditions. Propylene was polymerized while charging triethylaluminum to the first and second tanks at such charging rates that the thus-calculated production rates in the first and second tanks became equal to their corresponding desired constant values, in other words, the amounts of the organoaluminum retained in the first and second tanks became equal to their corresponding amounts of the organoaluminum required for achieving the desired constant values respectively. As a result, as shown in FIGURE 4, polypropylene of uniform quality (percentage of residue after extraction in boiling n-heptane for 6 hours: 96.8 ± 0.2%; MW/MN: 6.4 ± 0.2) was obtained at a constant production rate (40 kg/hr ± 0.5 kg/hr).

## Claims

1. A process for continuously producing propylene homopolymer or a propylene copolymer at a constant production rate in the presence of a catalyst system composed of a transition metal catalyst and an organoaluminium compound, which comprises:
determining beforehand in a continuous polymerization process, which is similar to that carried out in an actual polymerization apparatus, the relation between the amount of organoaluminium charged into the process and the production rate of polypropylene per unit amount of a transition metal catalyst;
determining from said relation a specific range within which, i.e., below a specific upper limit but above a specific lower limit, the production rate of polypropylene per unit amount of a transition metal catalyst can be controlled without modifications to the physical properties of the resulting polypropylene by changing the weight ratio of the organoaluminium to the transition metal catalyst;
calculating the production rate of the homopolymer or copolymer in a reaction tank from the quantity of heat generated per unit time in the reaction tank, by dividing the quantity of heat generated with the quantity of polymerization heat upon polymerization of propylene, and comonomer, if present, which quantity of heat generated is determined by correcting the quantity of heat added to and/or removed from the reaction tank in order to maintain its temperature constant by the quantity of heat released per unit time from the tank; comparing said production rate to a predetermined desired level;
controlling the amount of the organoaluminium compound charged into the reaction tank so as to maintain the production rate of the homopolymer or copolymer at a desired level while maintaining the charging rate of the transition metal catalyst at a constant level, when the weight ratio of the organoaluminium compound to the transition metal catalyst both retained in the reaction tank is within the above determined specific range; or controlling the amount of the transition metal catalyst charged into the reaction tank so as to maintain the production rate of the homopolymer or copolymer at the desired level, when the weight ratio of the organoaluminium compound to the transition metal catalyst both retained in the reaction tank is not within the above determined specific range.

2. The process according to claim 1, wherein the transition metal catalyst is a titanium halide supported on a magnesium halide as a carrier.

3. The process according to claim 1 or claim 2, wherein an organoaluminum is additionally charged into the reaction tank when the weight ratio of the organoaluminum compound to the transition metal catalyst both retained in the reaction tank is not greater than the preset value.

4. The process according to claim 3, wherein the additionally-charged organoaluminum is a trialkylaluminum.

5. The process according to claim 4, wherein the trialkylaluminum is triethylaluminum.

6. A process as claimed in claim 1, wherein the process is conducted by means of the following procedures:
(1) determining in advance a specific desired value (R) of the production rate of the polymer;
(2) calculating the quantity (A) of heat removed per unit time in the reaction tank, which tank is operated under a given temperature, from the load values of the coolants passing through the condenser and the jacket of the reaction tank;
(3) estimating the quantity (B) of heat released per unit time from the reaction system including the reaction tank;
(4) calculating the production rate (S) of the polymer in the reaction tank from the sum of (A) plus (B) while the reaction is being conducted, using the known relationship between the quantity (A) + (B) of heat generated per unit time and said production rate (S);
(5) calculating the amount (T) of the organoaluminum retained in the reaction tank while the reaction is being conducted, by totalling the amounts of the organoaluminum, solvent, propylene and polypropylene charged in the reaction tank, and the amounts of these materials discharged from the reaction tank;
(6) comparing (R) and (S), and determining the amount (U) of the organoaluminum required to be retained in order to give rise to a production rate (R) of the polymer;
(7) setting the charging rate (V) of the organoaluminum, so as to have the amount of the organoaluminum be the target value (U).

7. A process according to any one of the preceding claims wherein polymerization or copolymerization is conducted in a plurality of reaction tanks linked in series, in each of which the rate of polymerization or copolymerization is determined and controlled in accordance with the process defined in claim 1.

## Patentansprüche

1. Ein Verfahren zur kontinuierlichen Herstellung von Propylenhomopolymer oder einem Propylencopolymer mit einer konstanten Erzeugungsrate in Anwesenheit eines Katalysatorsystems, das aus einem Übergangsmetall-Katalysator und einer Organoaluminiumverbindung zusammengesetzt ist, das folgendes umfasst:
Bestimmen zuvor in einem kontinuierlichen Polymerisationsverfahren, das ähnlich demjenigen ist, das in einer praktischen Polymerisationsapparatur durchgeführt wird, der Beziehung zwischen der Menge an Organoaluminium, das in das Verfahren eingebracht werden muß, und der Erzeugungsrate von Polypropylen pro Einheitsmenge eines Übergangsmetall-Katalysators;
Bestimmen aus dieser Beziehung eines spezifischen Bereichs, innerhalb dessen, d.h. unterhalb einer spezifischen oberen Grenze, aber oberhalb einer spezifischen unteren Grenze, die Erzeugungsrate von Polypropylen pro Einheitsmenge eines Übergangsmetall-Katalysators ohne Modifikationen für die physikalischen Eigenschaften des entstehenden Polypropylens durch Änderung des Gewichtsverhältnisses des Organoaluminiums zu dem Übergangsmetall-Katalysators gesteuert werden kann;
Berechnen der Erzeugungsrate des Homopolymeren oder Copolymeren in einem Reaktionstank aus der Menge der pro Zeiteinheit in dem Reaktionstank erzeugten Wärme durch Dividieren der erzeugten Wärmemenge durch den Betrag der Polymerisationswärme beim Polymerisieren von Propylen und, wenn es vorhanden ist, Comonomerem,wobei die erzeugte Wärmemenge bestimmt wird, indem die Wärmemenge, die dem Reaktionstank zugeführt und/oder von diesem abgeführt wird, um dessen Temperatur konstant zu halten, durch die von dem Tank abgegebene Wärmemenge pro Zeiteinheit korrigiert wird;
Vergleichen der Erzeugungsrate mit einem vorherbestimmten gewünschten Niveau;
Steuern der Menge der Organoaluminiumverbindung, die in den Reaktionstank eingebracht wird, so, daß die Erzeugungsrate des Homopolymeren oder Copolymeren auf einem gewünschten Niveau gehalten wird, während die Beschickungsrate des Übergangsmetall-Katalysators auf einem konstanten Niveau gehalten wird, wenn das Gewichtsverhältnis der Organoaluminiumverbindung zu dem Übergangsmetall-Katalysator, die beiden in dem Reaktionstank gehalten werden, innerhalb des oben bestimmten spezifischen Bereiches liegt; oder Steuern der Menge des Übergangsmetall-Katalysators, der in den Reaktionstank eingebracht wird, so, daß die Erzeugungsrate des Homopolymeren oder Copolymeren auf dem gewünschten Niveau gehalten wird, wenn das Gewichtsverhältnis der Organoaluminiumverbindung zu dem Übergangsmetall-Katalysator, die beide in dem Reaktionstank gehalten werden, nicht innerhalb des oben bestimmten spezifischen Bereiches liegt.

2. Das Verfahren nach Anspruch 1, bei dem der Übergangsmetall-Katalysator ein Titanhalogenid ist, das auf einem Magnesiumhalogenid als einem Träger getragen wird.

3. Das Verfahren nach Anspruch 1 oder Anspruch 2, bei dem ein Organoaluminium zusätzlich in den Reaktionstank eingebracht wird, wenn das Gewichtsverhältnis der Organoaluminiumverbindung zu dem Übergangsmetall-Katalysator, die beide in dem Reaktionstank gehalten werden, nicht größer als der vorher eingestellte Wert ist.

4. Das Verfahren nach Anspruch 3, bei dem das zusätzlich eingebrachte Organoaluminium ein Trialkylaluminium ist.

5. Das Verfahren nach Anspruch 4, bei dem Trialkylaluminium Triäthylaluminium ist.

6. Ein Verfahren nach Anspruch 1, bei dem das Verfahren mittels der folgenden Verfahrensschritte durchgeführt wird:
1) Bestimmen im voraus eines spezifisch gewünschten Wertes (R) für die Erzeugungsrate des Polymeren;
2) Berechnen der Menge (A) an Wärme, die pro Zeiteinheit von dem Reaktionstank abgeführt wird, wobei der Tank unter einer vorgegebenen Temperatur betrieben wird, aus den Lastwerten der Kühlmittel, die durch den Kondensator und den Mantel des Reaktionstanks hindurchströmen;
3) Abschätzen der Menge (B) der Wärme, die pro Zeiteinheit von dem Reaktionssystem, einschließlich dem Reaktionstank,abgegeben wird;
4) Berechnen der Erzeugungsrate (S) des Polymeren in dem Reaktionstank aus der Summe von (A) plus (B), während die Reaktion durchgeführt wird, wobei die bekannte Beziehung zwischen der Menge (A) plus (B) der erzeugten Wärme pro Zeiteinheit und der besagten Erzeugungsrate (S) verwendet wird;
5) Berechnen der Menge (T) des Organoaluminiums, das in dem Tank gehalten wird, während die Reaktion durchgeführt wird, durch Aufsummieren der Mengen des Organoaluminiums, des Lösungsmittels, des Propylens und des Polypropylens, die in den Reaktionstank eingebracht werden, und der Mengen dieser Materialien, die von dem Reaktionstank abgelassen werden;
6) Vergleichen von (R) und (S) und Bestimmen der Menge (U) des Organoaluminiums, die behalten werden muß, um einen Anstieg einer Erzeugungsrate (R) des Polymeren zu liefern;
7) Einstellen der Beschickungsrate (V) des Organoaluminiums so, daß die Menge des Organoaluminiums der Zielwert (U) ist.

7. Ein Verfahren nach einem der vorhergehenden Ansprüche, bei dem Polymerisation oder Copolymerisation in einer Vielzahl von Reaktionstanks durchgeführt wird, die in Serie miteinander verbunden sind, wobei in jedem von ihnen die Rate der Polymerisation oder Copolymerisation gemäß dem Verfahren, das in Anspruch 1 definiert ist, bestimmt und gesteuert wird.

## Revendications

1. Un procédé de production continue d'homopolymère de propylène ou de copolymère de propylène avec un taux de production constant en présence d'un système catalytique composé d'un catalyseur à métal de transition et d'un composé organoaluminium, qui consiste à :
déterminer préalablement, dans un procédé de polymérisation continu qui est semblable à celui réalisé dans un appareil réel de polymérisation, la relation entre la quantité d'organoaluminium chargée dans le procédé et le taux de production du polypropylène par quantité unitaire d'un catalyseur à métal de transition ;
déterminer, à partir de ladite relation, une gamme spécifique dans laquelle, c'est-à-dire au-dessous d'une limite supérieure spécifique, mais au-dessus d'une limite inférieure spécifique, le taux de production du polypropylène, par quantité unitaire d'un catalyseur à métal de transition, peut être ajusté sans modification des propriétés physiques du polypropylène obtenu, par modification du rapport pondéral de l'organoaluminium au catalyseur à métal de transition ;
calculer le taux de production de l'homopolymère ou du copolymère, dans un récipient de réaction, à partir de la quantité de chaleur produite par unité de temps dans le récipient de réaction, par division de la quantité de chaleur produite par la quantité de chaleur de polymérisation lors de la polymérisation du propylène et du comonomère éventuellement présent, laquelle quantité de chaleur produite est déterminée par correction de la quantité de chaleur ajoutée au récipient de réaction et/ou éliminée de celui-ci, afin de maintenir sa température constante, par la quantité de chaleur libérée par unité de temps par le récipient ; comparer ledit taux de production à un taux prédéterminé désiré ;
ajuster la quantité du composé organoaluminium chargée dans le récipient de réaction, afin de maintenir le taux de production de l'homopolymère ou du copolymère à une valeur désirée, en maintenant le débit de chargement du catalyseur à métal de transition à une valeur constante, lorsque le rapport pondéral du composé organoaluminium au catalyseur à métal de transition, contenus tous deux dans le récipient de réaction, est dans la gamme spécifique déterminée ci-dessus ; ou en ajustant la quantité du catalyseur à métal de transition chargée dans le récipient de réaction de façon à maintenir le taux de production de l'homopolymère ou du copolymère à la valeur désirée, lorsque le rapport pondéral du composé organoaluminium au catalyseur à métal de transition, tous deux continus dans le récipient de réaction, ne se situe pas dans la gamme spécifique déterminée ci-dessus.

2. Le procédé selon la revendication 1, dans lequel le catalyseur à métal de transition est un halogénure de titane porté sur un halogénure de magnésium en tant que support.

3. Le procédé selon la revendication 1 ou la revendication 2, dans lequel on introduit de plus un organoaluminium dans le récipient de réaction lorsque le rapport pondéral du composé organoaluminium au catalyseur à métal de transition, retenus tous deux dans le récipient de réaction, n'est pas supérieur à la valeur prédéterminée.

4. Le procédé selon la revendication 3, dans lequel l'organoaluminium additionnel chargé est un trialkylaluminium.

5. Le procédé selon la revendication 4, dans lequel le trialkylaluminium est le triéthylaluminium.

6. Un procédé selon la revendication 1, lequel procédé est réalisé selon le mode opératoire suivant :
(1) détermination préalable d'une valeur désirée spécifique (R) du taux de production du polymère ;
(2) calcul de la quantité (A) de chaleur éliminée par unité de temps dans le récipient de réaction, lequel récipient fonctionne à une température donnée, à partir des charges des réfrigérants traversant le condenseur et la chemise du récipient de réaction ;
(3) estimation de la quantité (B) de chaleur libérée par unité de temps du système réactionnel comprenant le récipient de réaction ;
(4) calcul du taux de production (S) du polymère dans le récipient de réaction à partir de la somme de (A) plus (B) tandis que la réaction s'effectue, en utilisant la relation connue entre la quantité (A) + (B) de chaleur produite par unité de temps et ledit taux de production (S) ;
(5) calcul de la quantité (T) de l'organoaluminium retenue dans la récipient de réaction tandis que la réaction s'effectue, par totalisation des quantités de l'organoaluminium, du solvant, du propylène et du polypropylène chargés dans le récipient de réaction et des quantités de ces matières déchargées du récipient de réaction ;
(6) comparaison de (R) et de (S) et détermination de la quantité (U) de l'organoaluminium qu'il faut retenir pour atteindre un taux de production (R) du polymère ; et
(7) fixation du débit de chargement (V) de l'organoaluminium de façon à ce que la quantité d'organoaluminium soit la valeur cible (U).

7. Un procédé selon l'une quelconque des revendications précédentes, dans lequel on effectue une polymérisation ou une copolymérisation dans plusieurs récipients de réaction réunis en série, dans chacun desquels le taux de polymérisation ou de copolymérisation est déterminé et ajusté selon le procédé défini dans la revendication 1.
